# EUROPÄISCHE PATENTSCHRIFT

(11) **EP 0 840 004 B1**
(45) Veröffentlichungstag und Bekanntmachung des Hinweises auf die Patenterteilung: **16.10.2002**
(21) Anmeldenummer: 97110725.5
(22) Anmeldetag: 01.07.1997
(51) Int. Cl.: F02M 59/46, F02M 59/36, F02M 41/14, F16K 31/06, F16K 1/36

(54) **Magnetventil**
Electromagnetic valve
Soupape électromagnétique

(30) Priorität: 04.11.1996 DE 19645308
(43) Veröffentlichungstag der Anmeldung: 06.05.1998
(73) Patentinhaber: ROBERT BOSCH GMBH, 70442 Stuttgart (DE)
(72) Erfinder: Boehland, Peter, 71711 Steinheim (DE)

(56) Entgegenhaltungen:
- EP-A- 0 612 920
- US-A- 4 653 455
- US-A- 4 832 312

## Beschreibung

### Stand der Technik

Die Erfindung bezieht sich auf ein elektrisch gesteuertes Ventil nach der Gattung des Hauptanspruchs. Ein derartiges Ventil ist bekannt (EP 0 309 797 B1).

Bei einem bekannten Magnetventil, das zur Steuerung des Durchgangs einer Verbindung zwischen einem Hochdruckraum und einem Niederdruckraum ein von einem Elektromagneten entgegen der Kraft einer Rückstellfeder bewegtes Ventilglied aufweist und dort in einer Führungsbohrung des Ventilgehäuses axial geführt ist, wird der Durchtrittsquerschnitt durch das Abheben einer auf dem Ventilglied angeordneten Kegelfläche von einem konischen Ventilsitz im Ventilgehäuse gebildet, wobei jeweils ober- und unterhalb des Ventilsitzes ein Ringraum in das Ventilgehäuse eingearbeitet ist, in den jeweils die Hochdruck- oder Niederdruckleitung mündet. Das Ventilglied in Form eines Hohlzylinders ist dabei über einen Stößel mit einem Anker verbunden, auf den der Elektromagnet wirkt. Das Verschließen des Durchgangsquerschnittes zwischen Hoch- und Niederdruckraum erfolgt dabei durch das Aufsetzen einer, durch den Übergang der Kegelfläche zur zylinderförmigen Mantelfläche gebildeten Dichtkante am Ventilglied auf die Fläche des konischen Ventilsitzes, wobei der Durchgangsquerschnitt zwischen der Kegelfläche des Ventilgliedes und dem Ventilsitz so ausgeführt ist, daß bereits zu Beginn des Öffnungshubes ein möglichst großer Öffnungsquerschnitt rasch aufsteuerbar ist, der sich im weiteren Verlauf des Öffnungshubes stetig vergrößert.

Dabei hat der Durchtrittsquerschnitt des bekannten Ventils den Nachteil, daß an der Dichtkante und im Durchtrittsquerschnitt zwischen der Kegelfläche des Ventilgliedes und dem Ventilsitz in Folge der hohen Strömungsgeschwindigkeiten der Druck des Fluids unter den Dampfdruck sinkt und Dampfblasen bzw. Hohlräume entstehen. Durch den Druckabfall öffnet das Ventil verzögert.

Weiterhin offenbart die US-A-4 653 455 ein ventil, bei dem beim Öffnen des Ventils durch Umlenken des durchströmenden Fluids eine Strömungskraft in Ventil-Öffnungsrichtung erzeugt wird.

### Vorteile der Erfindung

Das erfindungsgemäße Magnetventil mit den kennzeichnenden Merkmalen des Patentanspruches hat gegenüber dem Stand der Technik den Vorteil, daß durch die Anordnung einer der Dichtkante stromabwärts nachgeschalteten Umlenkstelle keine Drosselung auftritt, durch die es zu Problemen bei der Füllung und/oder zu einem unerwünschten Ansaugen der Ventilnadel kommen kann.

Der durch die Umlenkstelle entstehende Staudruck auf die Nadel vergrößert die das Ventil öffnende Kraft erheblich, so daß ein schnelles und reproduzierbares Öffnen des Ventils gewährleistet ist. Beide Vorteile und vorteilhafte Ausgestaltungen des Erfindungsgegenstandes ergeben sich aus der Beschreibung und der Zeichnung.

### Zeichnung

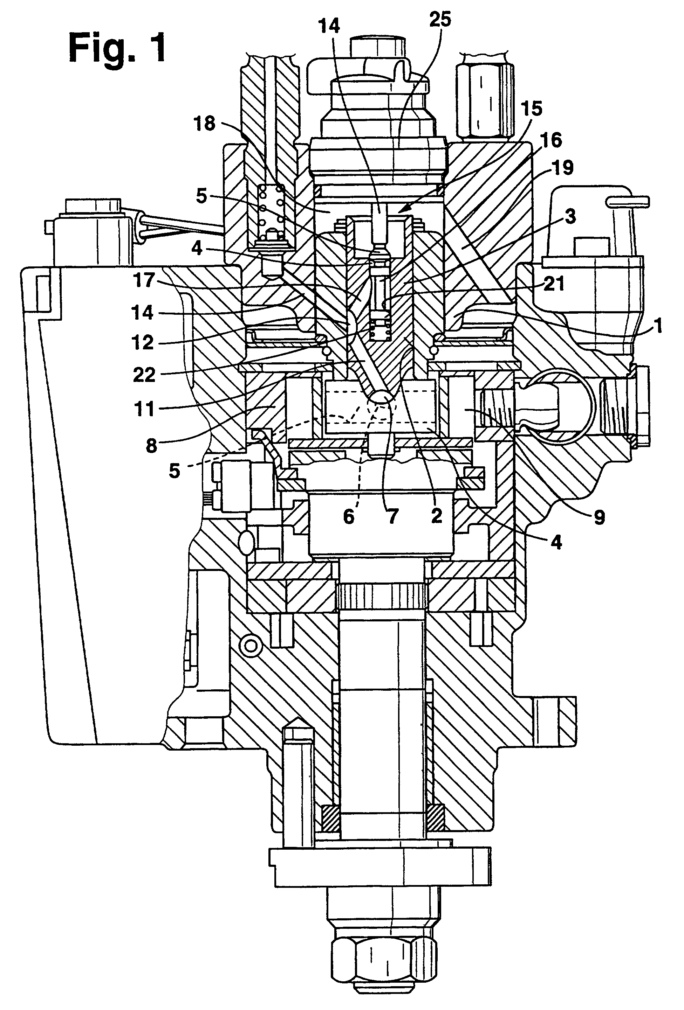

Ein Ausführungsbeispiel der Erfindung ist in der Zeichnung dargestellt und in der nachfolgenden Beschreibung näher erläutert. Es zeigen: Figur 1 einen Schnitt durch das elektrisch gesteuerte Ventil, Figur 2 das Ventil in vergrößertem Maßstab und Figur 3 ein Schaubild über den Strömungsverlauf.

### Beschreibung des Ausführungsbeispiels

In der Zeichnung ist eine Kraftstoffverteilereinspritzpumpe der Radialkolbenpumpenbauart im Teilschnitt dargestellt. In einem Gehäuse 1 in dieser Kraftstoffeinspritzpumpe ist eine Gehäusebohrung 2 in Form einer Sackbohrung bzw. einer einseitig geschlossenen Bohrung eingebracht, in der ein in Form eines Verteilers 3 ausgebildetes Teil bewegbar, hier drehbar, gelagert ist. An seinem aus der Gehäusebohrung 2 herausragenden Ende weist der Verteiler 3 einen Bund 4 auf, in dem radial zur Längsachse des Verteilers 3 Zylinderbohrungen 5 eingebracht sind, in denen Pumpenkolben 6 geführt sind, die im innen liegenden Teil der Zylinderbohrungen einen gemeinsamen, als Hochdruckquelle dienender Pumpenarbeitsraum 7 einschließen. Die Pumpenkolben werden dabei dicht gleitend durch an sich bekannte Nockenmittel hin- und hergehend angetrieben, z.B. mittels eines Nockenrings 8, auf denen mit den Pumpenkolben jeweils verbundene Rollenschuhe 9 gleiten. Der Nockenring 8 ist in diesem Falle als im wesentlichen feststehender Nockenring ausgebildet, während der Antrieb des Verteilers über eine Antriebsachse 10 erfolgt, die zugleich über die Drehbewegung des Verteilers die Relativbewegung der Rollenschuhe entlang der Nockenbahn bewirkt und somit dem Antrieb der Pumpenkolben dient. Beim Einwärtshub der Pumpenkolben wird im Pumpenarbeitsraum 7 ein Kraftstoffdruck in Höhe des Kraftstoffeinspritzdruckes erzeugt. Der Kraftstoff wird aus dem Pumpenarbeitsraum 7 über eine Druckleitung 11 im Verteiler 3 zu einer Austrittsöffnung in Form einer Verteileröffnung 12 an der Mantelfläche des Verteilers geleitet. Im Bereich der Mündung der Verteileröffnung 12 in der Mantelfläche sind in dem Gehäuse 1 von der Gehäusebohrung 2 abführende Einspritzleitungen 14 vorgesehen, die jeweils zu einem nicht weiter gezeigten Kraftstoffeinspritzventil führen, um dort den auf Hochdruck gebrachten Kraftstoff zur Einspritzung bei der Brennkraftmaschine zu bringen. Der hohe Kraftstoffeinspritzdruck steht dabei an der Verteileröffnung 12 pro Zuordnung zu der jeweiligen Kraftstoffeinspritzleitung 11 nur so lange an, solange ein Einspritzzeitpunkt und Einspritzmenge steuerndes elektrisch gesteuetes Ventil z.B.in Form eines Magnetventils 15 mit einem Ventilglied 16 geschlossen ist. Dieses Magnetventil liegt in einer Verbindungsleitung 17 von der Verteileröffnung 12 zu einem sich stirnseitig an den Verteiler 3 anschließenden Entlastungsraum 18, der wiederum über eine Rücklaufleitung 19 entlastet ist. Bei geöffnetem Magnetventil wird somit der von den Pumpenkolben 6 verdrängte Kraftstoff mehr oder weniger drucklos, jedenfalls unterhalb des Kraftstoffeinspritzdruckes, in den Entlastungsraum 18 zurückgefördert.

Das Ventilglied 16 ist in einer koaxial zur Drehachse des Verteilers 3 liegenden Sackbohrung 21 angeordnet, wobei der Verteiler zugleich als Ventilgehäuse dient. Von unten wirkt auf das Ventilglied eine Rückstellfeder 22 in Form einer Schraubendruckfeder und auf seiner in den Entlastungsraum ragenden Seite ist eine Stößel 24, der mit den nichtgezeigten Anker des Elektromagneten 25 des Magnetventils 15 angelenkt. Das Ventilglied 16 weist eine kegelförmige Dichtfläche 29 auf, die mit einem kegelförmigen, einen verteileröffnungsseitigen Hochdruckraum 30 mit dem Entlsastungsraum 18 verbindenden Ventilsitz 32 am Verteiler 3 zusammen wirkt.

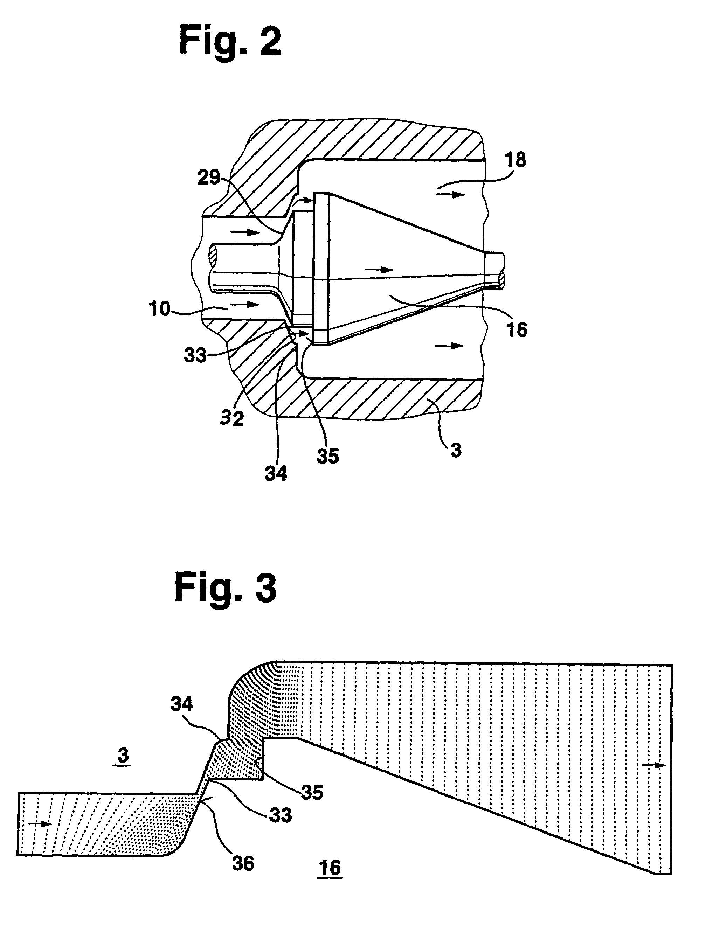

Wie am besten in der vergrößerten Darstellung nach der Figur 2 zu erkennen ist, wird die kegelförmige des Ventilgliedes 16 Dichtfläche 29, die sich auf den Ventilsitz 32 dicht aufsetzt und damit den Hochdruckraum 30 gegenüber dem Entlastungsraum 18 zuverlässig abdichtet, von einer Abströmkante 33 begrenzt. In Durchströmrichtung hinter der Abströmkante 33 ist an den Ventilkörper 3 ein Umlenkstelle in Form einer ringförmigen Umlenkwand 34 mit torusförmigem Übergang angeformt an der die Strömung des durchströmenden Kraftstoffs in Achsrichtung bzw. Stellrichtung des Ventilkörpers umgelenkt wird. Gegenüber dieser Umlenkstelle ist das Ventilglied 16 stromabwärts der Abströmkante mit einer axialweisenden Ringfläche 35 versehen, die als Angriffs- und Prallfläche für den durchströmenden Kraftstoff bestimmt ist.

### Wirkungsweise

Die Wirkungsweise der erfindungsgemäßen Einrichtung soll nun im wesentlichen anhand des Schaubildes über den Strömungsverlauf nach der Figur 3 erläutert werden. Der im Hochdruckraum 30 herrschenden Hochdruck von etwa 1000 Bar steht bei geschlossenem Magnetventil von unten am Ventilschließglied 16 an. Damit das Magnetventil 15 geschlossen bleiben kann, muß es druckausgeglichen sein und es darf nur eine geringe Öffnungskraft im geschlossenen Zustand vorhanden sein. Der Elektromagnet 25 ist bestromt und hält das Magnet geschlossen.

Wenn nun durch Abschaltung des Elektro-Magneten 25 die Magnetkraft wegfällt, hebt der Hochdruck zusammen mit der Ventilfeder 22 das Ventilglied 16 von seinem Ventilsitz 32 ab. Flüssigkeit unter hohem Druck durchdringt in im wesentlichen radialer Richtung von innen nach außen einen Sitzspalt 36 mit hoher Strömungsgeschwindigkeit und erreicht dann die Umlenkstelle 34, an der die Flüssigkeit in eine axiale Richtung umgeleitet wird. In dieser Fließrichtung trifft sie mit vollem Staudruck auf die Ringfläche 35 am Ventilglied 16. Durch die resultierende Kraft wird das Ventilglied 16 aufgerissen und öffnet den Ventildurchgang schnell und vollständig und reproduzierbar, und die Flüssigkeit gelangt ohne weiteres in den Niederdruckraum 18.

Auf diese Weise wird eine angestrebte Nadelöffnungskrafterhöhung durch eine besondere Ausnutzung der Strömungsenergie mit einfachen Mitteln erreicht. Das Magnetventil 15 muß schnell öffnen, um einen schnellen Druckabfall am Ende der Einspritzung von mit Magnetventil gesteuerten Diesel-Einspritzpumpen zu erreichen. Durch variieren der Größe der Ringfläche 35 und des Umlenkwinkels an der Umlenkstelle 34 kann die Kraftverstärkung am Ventilglied 5 beliebig verändert werden. Die Erfindung läßt sich sowohl bei Verteilereinspritzpumpen wie z.B. die oben gezeigte Radialkolben-Verteilereinspritzpumpe, bei Pumpedüsen, Pumpeleitungsdüsen und Axialkolbenpumpen allgemein anwenden.

## Patentansprüche

1. Elektrisch gesteuertes Ventil zur Steuerung des Durchganges einer Verbindung zwischen einem zumindest zeitweise auf Fluidhochdruck gebrachten Hochdruckraum (10), insbesondere einem Pumpenarbeitsraum einer Kraftstoffeinspritzpumpe, und einem Niederdruckraum (18), mit einem in einer ständig mit dem Hochdruckraum (10) verbundenen Sackbohrung (21) in einem Ventilgehäuse (3) eingesetzten Ventilglied (16), das von einem Elektro-Magneten (25) entgegen der Kraft einer Ventilfeder (22) verschiebbar ist, wobei das Ventilglied (16) eine kegelförmige Dichtfläche (29) hat, die mit einem kegelförmigen, den Hochdruckraum (10) mit dem Niederdruckraum (18) verbindenden Ventilsitz (32) am Ventilgehäuse (3) zusammen wirkt, **dadurch gekennzeichnet, daß** in im wesentlichen radialer Durchströmrichtung von innen nach außen hinter einer die Dichtfläche (29) des Ventilglieds (16) begrenzenden Abströmkante (33) am Ventilglied (16) eine ringförmige Umlenkwand (34) mit torusförmigem Übergang am Ventilkörper vorgesehen ist, an der die Strömung der zwischen kegelförmiger Ventildichtfläche (29) und kegelförmigem Ventilsitz (32) durchströmenden Flüssigkeit in axialer Richtung auf eine Ringfläche (35) am Ventilglied (16) gelenkt wird und eine in Ventil-Öffnungsrichtung wirkende Strömungskraft erzeugt wird.

## Claims

1. Electrically controlled valve for controlling the passage of a connection between a high-pressure chamber (10) which is brought to high fluid pressure, at least from time to time, in particular a pump working chamber of a fuel injection pump, and a low-pressure chamber (18), having a valve element (16) which is inserted into a blind bore (21) continually connected to the high-pressure chamber (10) in a valve housing (3) and which can be displaced by an electromagnet (25) counter to the force of a valve spring (22), the valve element (16) having a conical sealing face (29), which interacts with a conical valve seat (32) on the valve housing (3), connecting the high-pressure chamber (10) to the low-pressure chamber (18), **characterized in that** in the substantially radial flow direction from the inside to the outside, downstream of an outflow edge (33), bounding the sealing face (29) of the valve element (16), on the valve element (16) an annular deflection wall (34) with a toroidal transition to the valve body is provided, at which edge the flow of the fluid flowing through between the conical valve sealing face (29) and conical valve seat (32) is deflected in the axial direction onto an annular face (35) on the valve element (16) and produces a fluidic force acting in the valve opening direction.

## Revendications

1. Soupape à commande électrique pour commander l'ouverture d'une liaison entre une chambre à haute pression (10) mise à la haute pression du fluide au moins de temps à autre, notamment une chambre active d'une pompe d'injection de carburant, et une chambre basse pression (18), comprenant
un organe formant soupape (16) placé dans un perçage borgne (21) d'un corps de soupape (3), ce perçage étant relié en permanence à la chambre haute pression (10), l'organe de soupape (16) coulissant contre la force d'un ressort de soupape (22) par un électroaimant (23), et ayant une surface d'étanchéité (29) en forme de cône coopérant avec un siège de soupape (32) conique qui sur le boîtier de soupape (3) relie la chambre haute pression (10) à la chambre basse pression (18),
**caractérisée en ce que**
dans la direction de passage essentiellement radiale de l'intérieur vers l'extérieur, derrière une arrête de sortie (33) délimitant la surface d'étanchéité (29) sur l'organe de soupape (16), une paroi de déviation annulaire (34) est prévue avec un passage de forme torique sur le corps de soupape, arête qui dévie l'écoulement du liquide passant entre la surface d'étanchéité de soupape (29) conique et le siège de soupape (32), conique, dans la direction axiale vers une surface annulaire (35) de l'organe de soupape (16), et génère une force fluidique agissant dans le sens de l'ouverture de la soupape.
